# EUROPEAN PATENT SPECIFICATION

(11) **EP 3 892 830 B1**
(45) Date of publication and mention of the grant of the patent: **14.09.2022**
(21) Application number: 21164741.7
(22) Date of filing: 24.03.2021
(51) Int. Cl.: F01K 23/10, F01K 13/02

(54) **MODELING AND CONTROL OF GAS CYCLE POWER PLANT OPERATION BY VARYING SPLIT LOAD FOR MULTIPLE GAS TURBINES**
MODELLIERUNG UND STEUERUNG DES BETRIEBES EINES GAS-KREISLAUF-KRAFTWERKS DURCH VARIATION DER GETEILTEN LAST FÜR MEHRERE GASTURBINEN
MODÉLISATION ET COMMANDE DE FONCTIONNEMENT D'UNE CENTRALE ÉLECTRIQUE À CYCLE À GAZ EN FAISANT VARIER LA CHARGE FRACTIONNÉE POUR PLUSIEURS TURBINES À GAZ

(30) Priority: 09.04.2020 US 202016844480
(43) Date of publication of application: 13.10.2021
(73) Proprietor: General Electric Company, Schenectady, NY 12345 (US)
(72) Inventor: TRALSHAWALA, Nilesh, Schenectady, NY 12345 (US); WANG, Difei, Atlanta, GA 30339 (US); EWENS, David Spencer, Greenville, SC 29615 (US); SUBRAMANYAM, Karthik, Atlanta, GA 30339 (US); KUMAR, Aditya, Niskayuna, SC 12309 (US); ZHOU, Junqiang, Niskauna, GA 12309 (US); CAMPBELL, Anthony Bruce, Greenville, SC 29615 (US)
(74) Representative: Novagraaf Group

(56) References cited:
- EP-A1- 3 309 403
- US-A1- 2014 260 177
- US-A1- 2014 331 686
- US-A1- 2015 184 549
- US-A1- 2015 184 550
- US-A1- 2016 281 607
- US-A1- 2018 284 706

## Description

### BACKGROUND

The invention relates generally to the modeling and control of power plants. More specifically, embodiments of the invention provide an operational methodology to model and control a power plant by modeling and analysis of variant split loads for multiple gas turbines within the power plant.

Document US2015/184550 A1 discloses for example a control method for optimizing a turn-down operation for a power plant having a plurality of generating units. Power plants typically include a variety of different turbomachines and/or systems that are used to generate a power output. Two conventional power systems used to generate power include gas turbine systems and combined cycle power plants, which typically include a gas turbine system(s). Conventional combined cycle power plants employ one or multiple gas turbine system(s) operatively coupled to one or multiple steam turbine system(s). The gas turbine system includes a compressor coupled to a gas turbine. The gas turbine is usually coupled to and drives an external component, such as a generator, for producing a load or power output. The steam turbine system includes a high pressure (HP) turbine portion operatively coupled to an intermediate pressure (IP) turbine portion that, in turn, is coupled to a low pressure (LP) turbine. Similar to the gas turbine of the gas turbine system, the HP, IP and LP turbines are employed to drive an external component (e.g., generator). In a typical combined cycle power plant, exhaust gas from the gas turbine is passed to a heat recovery steam generator (HRSG), which may be used to produce and reheat steam to the various turbines of the steam turbine system for enhanced efficiency of the system and/or power plant. Downstream of the HRSG the exhaust gas is released to the atmosphere through a stack.

The increased availability of alternative energy sources, such as various forms of renewable energy, has also increased the complexity of operating combined cycle power plants. Fluctuations in power generation demand on a combined cycle power plant often require the system to shift between different load conditions, varying the amount of generated power over time. The operation of a power plant at different amounts of load may affect several attributes of the power plant, including the internal temperature of various components and/or fuel consumption. In some cases, extended operation at varying loads may adversely affect efficiency or useful life of some components.

### BRIEF DESCRIPTION

The invention provides a method for operating a combined cycle power plant (CCPP), the method including: generating a power plant model for operating the CCPP at an ambient condition and a load condition; determining whether at least two gas turbines in the power plant model of the CCPP generate a power output at the ambient condition and the load condition; modeling a fuel consumption of the CCPP for a baseline split ratio between the at least two gas turbines using the power plant model of the CCPP at the ambient condition and the load condition; creating a variant split ratio between the at least two gas turbines; determining, using the power plant model, whether the variant split ratio meets a quality threshold for the CCPP, the quality threshold including at least a minimum reduction in the fuel consumption; recalculating the variant split ratio in response to the variant split ratio not meeting the quality threshold; and adjusting the CCPP to use the variant split ratio in response to the variant split ratio meeting the quality threshold.

The invention also provides a program product stored on a computer readable storage medium for operating a combined cycle power plant (CCPP), the computer readable storage medium including program code for causing a computer system to perform actions including: generating a power plant model for operating the CCPP at an ambient condition and a load condition; determining whether at least two gas turbines in the power plant model of the CCPP generate a power output at the ambient condition and the load condition; modeling a fuel consumption of the CCPP for a baseline split ratio between the at least two gas turbines using the power plant model of the CCPP at the ambient condition and the load condition; creating a variant split ratio between the at least two gas turbines; determining, using the power plant model, whether the variant split ratio meets a quality threshold for the CCPP, the quality threshold including at least a minimum reduction in the fuel consumption; recalculating the variant split ratio in response to the variant split ratio not meeting the quality threshold; and adjusting the CCPP to use the variant split ratio in response to the variant split ratio meeting the quality threshold.

In an example not forming part of the invention a system is disclosed including: a combined cycle power plant (CCPP) having a gas turbine and a heat recovery steam generator (HRSG); and a system controller in communication with the gas turbine and the HRSG of the CCPP, the system controller being operable to: operate the CCPP at an ambient condition and a load condition; generate a power plant model of the CCPP for operating at the ambient condition and the load condition; model a fuel consumption using a baseline split ratio and the power plant model of the CCPP at the ambient condition and the load condition; create a variant split ratio for the CCPP; determine, using the power plant model, whether the variant split ratio meets a quality threshold for the CCPP, the quality threshold including at least a minimum reduction in the fuel consumption; modify the variant split ratio in response to the variant split ratio not meeting the quality threshold; and adjust the CCPP to use the variant split ratio in response to the variant split ratio meeting the quality threshold.

The present invention is designed to solve the problems herein described.

### BRIEF DESCRIPTION OF THE DRAWINGS

These and other features of this invention will be more readily understood from the following detailed description of the various aspects of the invention taken in conjunction with the accompanying drawings that depict various embodiments of the invention, in which:
FIG. 1 is a schematic view of a system with a combined cycle power plant (CCPP).
FIG. 2 is an expanded schematic view of a system and CCPP with multiple gas turbines.
FIG. 3 shows an example computer environment operable to control a CCPP with multiple gas turbines according to embodiments of the present invention.
FIG. 4 provides an illustrative flow diagram of a method for operating a CCPP according to embodiments of the present invention.
FIG. 5 provides an illustrative plot of CCPP power output versus load in a CCPP according to embodiments of the present invention.
FIG. 6 provides an illustrative plot of inlet bleed heat (IBH) change versus load in a CCPP according to embodiments of the present invention.
FIG. 7 provides an illustrative plot of heat rate change percentage versus load for a variant split ratio in a CCPP according to embodiments of the present invention.
FIG. 8 provides an illustrative plot of inlet bleed heat (IBH) change versus load in a CCPP for multiple ambient conditions according to embodiments of the present invention.
FIG. 9 provides an illustrative plot of total heat rate for multiple ambient conditions in a CCPP according to embodiments of the present invention.
FIG. 10 provides an illustrative plot of CCPP efficiency for multiple ambient conditions according to embodiments of the present invention.

It is noted that the drawings of the invention are not to scale. The drawings are intended to depict only typical aspects of the invention, and therefore should not be considered as limiting the scope of the invention. In the drawings, like numbering represents like elements between the drawings.

### DETAILED DESCRIPTION

As an initial matter, in order to clearly describe the current technology it will become necessary to select certain terminology when referring to and describing relevant machine components within the various systems, components, and other embodiments of the invention. To the extent possible, common industry terminology will be used and employed in a manner consistent with its accepted meaning. Unless otherwise stated, such terminology should be given a broad interpretation consistent with the context of the present application and the scope of the appended claims. Those of ordinary skill in the art will appreciate that often a particular component may be referred to using several different or overlapping terms. What may be described herein as being a single part may include and be referenced in another context as consisting of multiple components. Alternatively, what may be described herein as including multiple components may be referred to elsewhere as a single part.

In addition, several descriptive terms may be used regularly herein, as described below. The terms "first," "second," and "third" may be used interchangeably to distinguish one component from another and are not intended to signify location or importance of the individual components.

The terminology used herein is for the purpose of describing particular embodiments only and is not intended to be limiting of the invention. As used herein, the singular forms "a," "an," and "the," are intended to include the plural forms as well, unless the context clearly indicates otherwise. It will be further understood that the terms "comprises" and/or "comprising," when used in this specification, specify the presence of stated features, integers, steps, operations, elements, and/or components but do not preclude the presence or addition of one or more other features, integers, steps, operations, elements, components, and/or groups thereof. "Optional" or "optionally" means that the subsequently described event or circumstance may or may not occur, and that the description includes instances where the event occurs and instances where it does not.

Where an element or layer is referred to as being "on," "engaged to," "connected to" or "coupled to" another element or layer, it may be directly on, engaged, connected or coupled to the other element or layer, or intervening elements or layers may be present. In contrast, when an element is referred to as being "directly on," "directly engaged to," "directly connected to" or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Embodiments of the present invention provide methods, program products, and systems for controlling various attributes of a combined cycle power plant (CCPP) by actively redistributing the power output from multiple gas turbines of the CCPP. Embodiments of the invention may include, e.g., generating a power plant model based on the CCPP for operating at an ambient condition and a load condition. The generating of such a model may include verifying the model's accuracy based on the present and/or historical operating data for the CCPP. The method may include determining whether at least two gas turbines in the power plant model of the CCPP will generate a power output at the ambient condition and the load condition. The method may also include using the model to model a fuel consumption of the CCPP as it operates at the ambient condition and the load condition, and creating a variant split ratio for modifying the relative amounts of power generated by the two or more gas turbines. The method may include determining whether the variant split ratio meets one or more quality thresholds for the CCPP, and adjusting the CCPP to use the variant split ratio in cases that meet these requirements. The adjusting of the CCPP may affect other variables of the CCPP, e.g., amount of inlet bleed heat (IBH) flow, heat rate, expected remaining lifespan of one or more gas turbines, and/or other variables affecting the power output and operating characteristics of the CCPP.

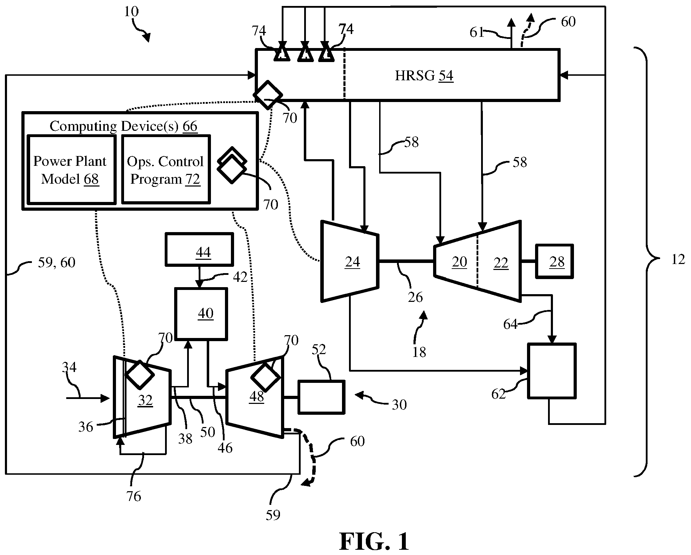

FIG. 1 shows a schematic depiction of a system 10 according to various embodiments of the invention. As shown, system 10 can include a combined cycle power plant 12 (hereafter, "CCPP 12") including a steam turbine (ST) system 18, which in the depiction shown, can include a high pressure (HP) portion 24, an intermediate pressure (IP) portion 20 and a low pressure (LP) portion 22, as is known in the art. HP portion 24, IP portion 20 and LP portion 22 of ST system 18 may be coupled and/or positioned on and/or may be configured to rotate a shaft 26 to produce mechanical work and/or to drive an additional component of ST system 18. As shown in FIG. 1, shaft 26 of ST system 18 may be coupled to and/or may drive an external component, and more specifically, a generator 28 configured to generate power and/or produce a load.

CCPP 12 can further include at least one gas turbine (GT) system 30. Although CCPP 12 may include two, five, ten, one-hundred, or more GT systems 30, only one is shown in FIG. 1 solely for the sake of example. GT system 30 may include a compressor 32. Compressor 32 compresses an incoming flow of fluid 34 (e.g., air) as it flows through compressor 32. Compressor 32 may include a plurality of stages of stator vanes (not shown) and rotating blades (not shown) positioned within compressor 32. The stator vanes and rotating blades positioned within compressor 32 may be configured to aid in moving and/or passing fluid 34 through compressor 32. Compressor 32 may include a set of inlet guide vanes (IGVs) 36. IGVs 36 are a type of vane structured specifically to direct the incoming flow of operating fluid onto the rotating blades of compressor 32. IGVs 36 may be adjustable between several positions to affect the flow rate, incident angle, and/or other properties of fluid entering compressor 32. IGVs 36 thus may be capable of affecting the temperature of compressor 32, the power output from GT system 30, and/or other properties. Compressor 32 delivers a flow of compressed fluid 38 (e.g., compressed air) to a combustor 40. Combustor 40 mixes the flow of compressed fluid 38 with a pressurized flow of fuel 42 provided by a fuel supply 44 and ignites the mixture to create a flow of combustion gas 46. The flow of combustion gas 46 is in turn delivered to a turbine component 48, which typically includes a plurality of stages of stator vanes (not shown) and turbine blades (not shown), similar to compressor 32. The flow of combustion gas 46 drives turbine component 48 to produce mechanical work. The mechanical work produced in turbine component 48 drives compressor 32 via a shaft 50, and may be used to drive a generator 52 (e.g., external component) configured to generate power and/or produce a load.

Although CCPP 12 is shown in FIG. 1 to include a dual-shaft configuration where two separate generators 28, 52 are utilized, it is understood that in other non-limiting examples, ST system 18 and GT system 30 may share a single shaft and in turn, may share a single generator. Additionally, although CCPP 12 is shown to only include a single ST system 18 and single GT system 30, it is understood that CCPP 12 may include a plurality of ST systems 18 and/or GT system(s) 30 that may be configured to generate an operational load and/or power output.

CCPP 12 can further include a heat recovery steam generator (HRSG) 54 fluidly connected with ST system 18 (e.g., with HP portion 24 and/or IP portion 20 and/or LP portion 22) and GT system 30. As shown in the non-limiting example of FIG. 1, HRSG 54 may be fluidly connected and/or coupled with ST system 18 via supply conduits 58 to provide steam to the portions of ST system 18 via supply conduits 58. Additionally in the non-limiting example of FIG. 1, HRSG 54 may be fluidly connected and/or coupled with GT system 30 via an exhaust channel 59 coupled to and/or in fluid communication with turbine component 48. Exhaust channel 59 may provide exhaust fluid 60 (e.g., gas) from GT system 30 to HRSG 54 to be utilized in generating and/or heating steam for ST system 18. A stack 61 of HRSG 54 may exhaust or release (excess or used) gas (e.g., exhaust fluid 60) and/or fluid from HRSG 54 into the atmosphere and/or out of CCPP 12.

CCPP 12 can further include a condenser 62. Condenser 62 may be in fluid communication and/or may be fluidly coupled with various components of CCPP 12. In a non-limiting example, condenser 62 may be fluidly connected and/or coupled to LP portion 22 of ST system 18 via steam exhaust duct 64. Condenser 62 may be configured to condense exhaust flow and/or bypass flow (e.g., line connecting HP 24 to condenser 62) from ST system 18 and/or HRSG 54, and providing a condensed fluid (e.g., condensate water) to HRSG 54, as is known in the art.

As shown in FIG. 1, system 10 can include at least one computing device 66 configured to generate (i.e., create and verify) a power plant model, and/or directly control the operation of, CCPP 12. Computing device(s) 66 can be hard-wired and/or wirelessly connected to and/or in communication with CCPP 12, and its various components (e.g., ST system 18, GT system 30, HRSG 54 and so on) via any suitable electronic and/or mechanical communication component or technique. Computing device(s) 66, and its various components discussed herein, may be a single stand-alone system that functions separate from another power plant control system (e.g., computing device) (not shown) that may control and/or adjust operations and/or functions of CCPP 12, and its various components (e.g., ST system 18, GT system 30 and so on). Alternatively, computing device(s) 66 and its components may be integrally formed within, in communication with and/or formed as a part of a larger power plant control system (e.g., computing device) (not shown) that may control and/or adjust operations and/or functions of CCPP 12, and its various components (e.g., ST system 18, one or more GT system(s) 30 and so on).

In various embodiments, computing device(s) 66 can generate (i.e., create and/or verify) a power plant model 68 of CCPP 12. Power plant model 68 may model or otherwise simulate many aspects of CCPP 12 operation, including performance, economic variables, environmental data, and/or other attributes of CCPP 12. In some instances, power plant model 68 may be known as or referred to as a "digital twin" or "digital model," and such terms are understood to be particular forms of power plant model 68 in various embodiments. Computing device 66 may be communicatively coupled to one or more sensors 70, as described herein, for provide input data for modeling and/or controlling CCPP 12. As discussed herein, computing device 66 can generate and/or modify power plant model 68. Computing device(s) 66 may rely upon the analysis and/or output from power plant model 68, as discussed below to control CCPP 12 and/or its various components to affect the operation of CCPP 12. For example, and as discussed herein, power plant model 68 may simulate various operational characteristics and/or settings of CCPP 12 (including power output and/or other parameters of ST system 18, GT system 30, HRSG 54, etc.) and the components included therein, to control the operation of system 10 and/or affect various attributes thereof.

In some cases, computing device 66 may include an operational control program ("Ops. Control Program") 72 for interacting with and/or controlling various aspects of system 12. Operational control program 72 may take the form of any currently known or later developed control system for managing the operation of a power plant, e.g., a proportional-integral-derivative (PID) controller for managing transient operation of CCPP 12. Operational control program 72 additionally or alternatively may include a PID sub-system configured to operate selectively during various power generation modes of CCPP 12. A PID controller or sub-system, refers to a system configured to calculate an error value on a continuous basis as the difference between a desired target value and one or more predetermined variables. In the case of a PID controller, operational control program 72 may operate by detecting variance between one or more variable(s) and a corresponding target (e.g., in power plant model 68) and applying a corrective adjustment, i.e., instructions to vary one or more properties of CCPP 12, such as relative load output, component temperature, valve position, and/or other adjustable operating parameters. According to an example, the corrective adjustment by operational control program 72 may modify an instruction by computing device(s) 66, e.g., to adjust the power output from selected GT systems 30 (e.g., shifting between outputting 50% of the total power output to a higher or lower value). Further operations implemented by computing device(s) 66 may include, e.g., adjusting a valve for controlling the flow of fuel to a 90% capacity position, into a corrected instruction to adjust the valve to a 70% capacity position to reduce the firing temperature and/or combustion rate(s) of GT system(s) 30. Operational control program 72 thus may amplify or mitigate corrective actions output from other algorithms and/or controllers of CCPP 12, and/or may modify CCPP 12 to use the settings in power plant model 68. However implemented, corrective adjustments by operational control program 72 may be calculated from the variable(s) and target(s) based on proportional, integral, and derivative terms using variables within power plant model 68, those measured by sensor(s) 70, and/or other information within computing device(s) 66 and/or other devices in communication therewith.

As shown in FIG. 1, computing device(s) 66 may include and/or may be in electrical and/or mechanical communication with sensor(s) 70, as well as many other additional and/or intermediate components such as valves, solenoids, actuators, converters, etc. (not shown) positioned throughout system 10. As shown in the non-limiting example of FIG. 1, and discussed herein, at least one sensor 70 of and/or connected to computing device(s) 66 may be positioned within ST system 18, GT system 30, HRSG 54 and/or one or more subcomponents of system 10 as discussed elsewhere herein. Sensor(s) 70 in communication with computing device(s) 66 of system 10 may be any suitable sensor or device configured to detect and/or determine data, information, and/or operational characteristics relating to CCPP 12 during operation. For example, and as discussed herein, sensor(s) 70 positioned within HRSG 54 of CCPP 12 may be any suitable sensor configured to detect and/or determine the properties of a working fluid (e.g., steam, exhaust fluid 60). Such properties may include the working fluid temperature within portions and/or components of HRSG 54 including ST system 18 and/or GT system 30, temperatures of component(s) of HRSG 54 of CCPP 12, and/or steam flow measurements of steam flowing through HRSG 54. In non-limiting examples, sensor(s) 70 may be configured as, but not limited to, thermometers, thermistor, thermocouples, and/or any other mechanical/electrical temperature sensors.

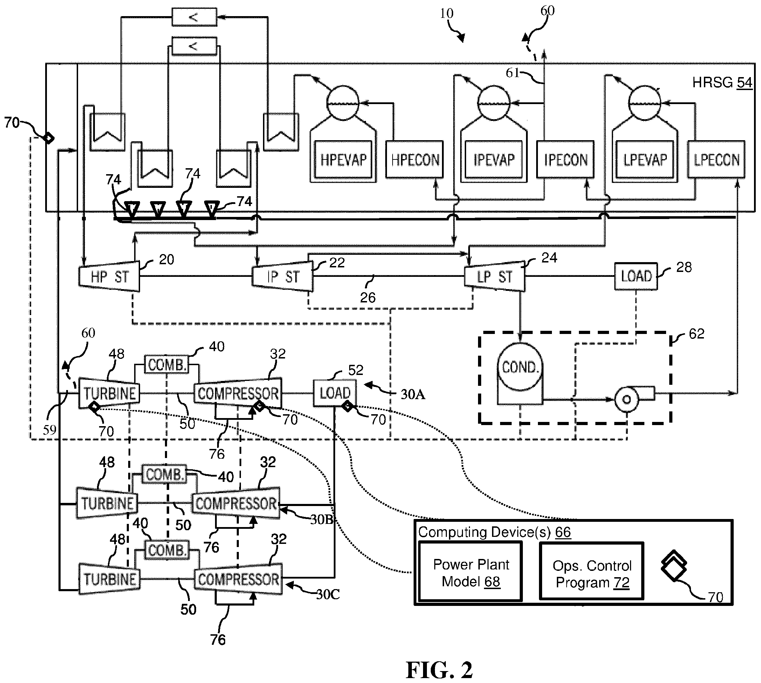

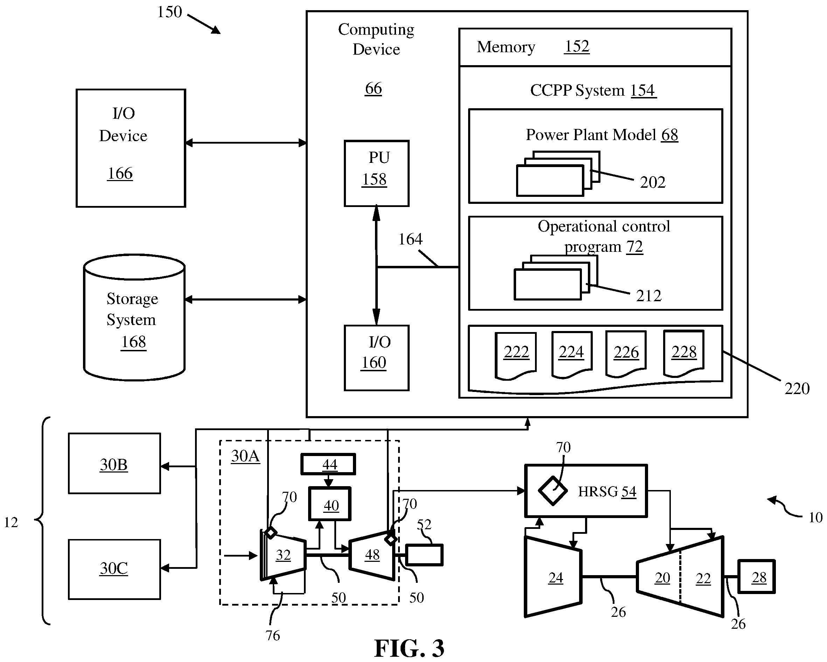

Although three sets of sensors 70 are shown, it is understood that system 10 may include more sensors 70 (e.g., as shown in FIGS. 2, 3) that may be configured to provide computing device(s) 66, and specifically operational control program 72, with information or data relating to the temperature or pressure of the fluids and components included within HRSG 54, and/or fluid flow measurements. The number of sensors 70 shown in FIG. 1 is merely illustrative and non-limiting. As such, system 10 may include more or fewer sensors 70 than depicted in FIG. 1 or other figures.

Referring to FIG. 2, an expanded schematic view of system 10 (FIG. 1) is shown to further illustrate various embodiments of the invention. System 10 may include, e.g., ST system 18 and GT system 30 mounted together on shaft 26. In the FIG. 2 arrangement, multiple GT systems 30 are shown and identified separately as a first GT system 30A, a second GT system 30B, and a third GT system 30C as an example. Embodiments of the invention provide operational methodologies, as well as related program products and systems, for operation of CCPP 12 at various amounts of load (i.e., "load conditions") and at various ambient conditions. In some cases, CCPP 12 may operate at a sustained load which provides a constant output of power to meet all or a portion of a customer's demands, and within predetermined power generation boundaries determined based on a design specification for CCPP 12. In other cases, CCPP 12 may operate at non-sustained amounts of load under conditions different from the operating specification of CCPP 12, for at least a threshold time period. The varying load conditions may be chosen to meet varying customer demands on CCPP 12.

As electrical grids diversify to include a wider variety of power sources, operation CCPP 12 or other systems at fixed load conditions has become less common. However, conventional implementations of CCPP 12 may not be structured to operate at such settings for extended time periods. In cases where CCPP 12 includes multiple GT systems 30 (e.g., systems 30A, 30B, 30C as shown), conventional methods for controlling CCPP 12 will evenly distribute the power generation burden across all GT systems 30 within CCPP 12, and/or allocate a higher power generation burden on selected GT system(s) 30 regardless of changes to load and/or ambient conditions. Embodiments of the invention provide a methodology for actively modeling and controlling the load split ratio (simply "split ratio" hereafter) between multiple GT system(s) 30 in CCPP 12 to maintain desired parameters and/or levels of efficiency when operating under conditions that differ from those predicted or otherwise contemplated in design specifications. Throughout the specification, "split ratio" may refer to the percent of load allocated to different GT system(s) 30 in CCPP 12, and additionally or alternatively may include the split ratio between GT system(s) 30 and other parameters such as changes to inlet guide vane (IGV) angle or inlet bleed heat (IBH) flow.

Embodiments of the invention also account for differences in the operation of CCPP 12 under different "ambient conditions," i.e., differences in the temperature, pressure, and/or other attributes of the setting where CCPP 12 is operating. For example, CCPP 12 may be operating in an area where the temperature is between approximately fifteen degrees Celsius (°C) and twenty-five °C. Embodiments of the invention may distinguish between different ambient conditions based on predetermined temperature ranges (e.g., of approximately five ° C) above or below another ambient condition. Thus, the "ambient condition" refers to a characterization of external variables (temperatures, pressures, etc.) within a particular embodiment, and not within user control. Higher temperatures may affect variables such as inlet temperature, exhaust temperature, fluid flow, heat rate, etc., throughout various subcomponents of CCPP 12. Similar variations to the above-noted and/or other variables of CCPP 12 may result from higher or lower operating pressures. In any case, the variations caused by the ambient condition of CCPP 12 may be independent of the load condition of CCPP 12.

According to embodiments, system 10 may include CCPP 12 operating under varying load conditions and/or ambient conditions. As the power output of CCPP 12 varies across operating conditions, CCPP 12 may produce its maximum output, a reduced output, etc. In such cases, the operational schedule for CCPP 12 may disproportionately generate power from some system(s) 18, 30 over other system(s) in CCPP 12. This situation may be associated with undesired consequences, such as reduced efficiency of one or more GT systems 30 of CCPP 12 as operation continues.

To improve operation at varying ambient conditions and/or load conditions, computing device(s) 66 and/or operational control system(s) 72 coupled to system(s) 18, 30 may rely on power plant model 68 to adjust the split ratio of GT system 30, thereby changing the power generation burden on each GT system 30 as CCPP 12 operates. Where applicable, the variant split ratio may be implemented, e.g., by changing the amount of fuel provided to GT system 30, adjusting operation settings of one or more GT system 30 in CCPP 12, and/or other operations discussed herein for increasing and decreasing the amount of power generated by targeted GT systems 30. The generation and verification of power plant model 68, in turn, may be based on monitoring and modeling the firing rate, exhaust temperatures, and/or heat rates within turbine component 48 based on load and ambient conditions, and further modeling other parameters of GT system 30 based on the modeled variables. In various embodiments, operational control system 72 may modify further operational parameters such as IGV 36 position, a fluid flow through an inlet bleed heat (IBH) line 76, and/or other operational parameters to further increase CCPP 12 efficiency and/or bring CCPP 12 into operational alignment with power plant model 68.

Referring to FIGS. 2 and 3 together, an illustrative environment 150 for operating system 10 and sub-components thereof is illustrated with a simplified depiction of CCPP 12. In the FIG. 3 illustration, only first GT system 30A is shown in detail, while second GT system 30B and third GT system 30C are represented in a simplified form for clarity of illustration. As shown, environment 150 can include computing device 66, which may include a memory 152 with a CCPP system 154 operating thereon. CCPP system 154 may be a software system integrating the features of power plant model 68 and/or operational control program 72 as sub-systems thereof. In further examples, power plant model 68 and/or operational control program 72 may be independent of each other and/or implemented using different computing devices 66. Computing device 66 may be an independent component as shown, or may be included as part of power plant model 68 as previously described. Environment 150 as shown in FIG. 3 represents one type of configuration for controlling CCPP 12. As discussed herein, power plant model 68 of computing device 66 may simulate the operation of CCPP 12 while operating at a set of ambient and load conditions. Operational control program 72 may include components for modifying the operation of CCPP 12, e.g., by providing and implementing a variant split ratio created with power plant model 68. Embodiments of the present invention may be configured or operated in part by a technician, computing device 66, and/or a combination of a technician and computing device 66. It is understood that some of the various components shown in FIG. 3 can be implemented independently, combined, and/or stored in memory for one or more separate computing devices that are included in computing device 66. Further, it is understood that some of the components and/or functionality may not be implemented, or additional schemas and/or functionality may be included as part of CCPP system 154.

Computing device 66 can include a processor unit (PU) 158, an input/output (I/O) interface 160, memory 152, and a bus 164. Further, computing device 66 is shown in communication with an external I/O device 166 and a storage system 168. CCPP system 154 may provide power plant model 68, which in turn can operate using various modules 202 (e.g., a calculator, a determinator, a comparator, etc.) for implementing various functions and/or logical steps. CCPP system 154 additionally or alternatively may provide operational control program 72 with its own set of modules 212 (e.g., a calculator, determinator, comparator, etc.) for implementing respective functions and/or steps of operational control program 72. The various modules 202, 212 can use algorithm-based calculations, look up tables, and similar tools stored in memory 152 for processing, analyzing, and operating on data to perform their respective functions. In general, PU 158 can execute computer program code to run software, such as CCPP system 154, which can be stored in memory 152 and/or storage system 168. While executing computer program code, PU 158 can read and/or write data to or from memory 152, storage system 168, and/or I/O interface 160. Bus 164 can provide a communications link between each of the components in computing device 66. I/O device 166 can comprise any device that enables a user to interact with computing device 66 or any device that enables computing device 66 to communicate with the equipment described herein and/or other computing devices. I/O device 166 (including but not limited to keyboards, displays, pointing devices, etc.) can be coupled to controller 160 either directly or through intervening I/O controllers (not shown).

Memory 152 can also include various forms of data 220 pertaining to CCPP 12 or more specifically system(s) 18, 30 of CCPP 12. As discussed elsewhere herein, power plant model 68 can simulate the operation of CCPP 12 at particular ambient and/or load conditions, while operational control program 72 can adjust exhaust temperature, firing temperature, relative load, and/or other operating parameters of CCPP 12 to implement one or more variant split ratios output from power plant model 68. To implement methods according to the invention, CCPP system 154 can store and interact with data 220 subdivided into various fields. For example, ambient condition field 222 can store data pertaining to ambient conditions for CCPP at various temperatures, pressures, and/or other environmental variables independent of CCPP 12 specifications. Data 220 can also include a load condition field 224 for cataloguing specification data for operating at various levels of output, including fixed and non-fixed outputs. A set of split ratios for CCPP 12 can be stored in a split ratio field 226 which can include one or more distributions of operating load for GT systems 30. Each split ratio recorded in split ratio field 226 optionally may be expressed as a load-dependent schedule of split loads for CCPP 12 at different load and/or ambient conditions. The values for each parameter stored in split ratio field 226 can in some cases be based on calibrated data and/or simulated values from power plant model 68 for one or more parameters during non-base load operation. It is thereby understood that data 220 can include several measured and/or calculated variables that can be applied to and/or stored in split ratio field 226 to control the relative power output for a set of GT systems 30. Data 220 may also include, e.g., a quality threshold field 228 for cataloguing quality thresholds such as a minimum improvement to CCPP 12 performance (e.g., heat rate reduction, plant efficiency increase, fuel consumption reduction, plant capacity increase, etc.), compliance with emissions limits (e.g., Nox emissions, CO emissions, etc.), compliance with operational stability limits (e.g., compressor operability limits, combustion stability limits, gas turbine firing temperature(s), gas turbine exhaust temperature(s), turbine shaft torque limits for system(s) 18, 30, operational limits of HRSG 54, operational limits for ST system 18, condenser pressure limits, etc.), and/or other operational quality metrics for CCPP 12. As noted herein, quality threshold field 228 may define one or more parameters which CCPP 12 must meet in order to shift from one split ratio to another.

Computing device 66 can comprise any general purpose computing article of manufacture for executing computer program code installed by a user (e.g., a personal computer, server, handheld device, etc.). However, it is understood that computing device 66 is only representative of various possible equivalent computing devices and/or technicians that may perform the various process steps of the invention. In addition, computing device 66 can be part of a larger system architecture operable to model and/or control various aspects and elements of CCPP 12.

To this extent, in other embodiments, computing device 66 can comprise any specific purpose computing article of manufacture comprising hardware and/or computer program code for performing specific functions, any computing article of manufacture that comprises a combination of specific purpose and general purpose hardware/software, or the like. In each case, the program code and hardware can be created using standard programming and engineering techniques, respectively. In one embodiment, computing device 66 may include a program product stored on a computer readable storage device, which can be operative to automatically control elements of CCPP 12 (e.g., systems 18, 30, HRSG(s) 54, etc.) when executed.

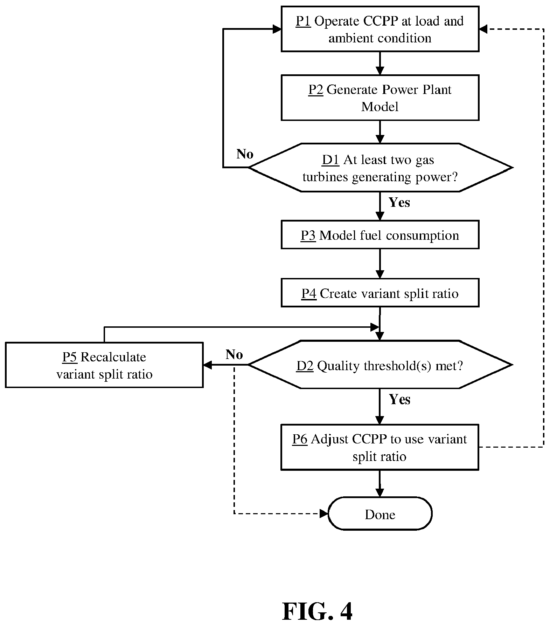

Referring to FIGS. 2-4, embodiments of the invention provide a method to operate CCPP 12, e.g., using power plant model 68 and operational control program 72. According to a specific example, FIG. 4 provides a flow diagram for controlling the operation of CCPP 12 in the example configuration shown, though control of CCPP 12 in other configurations is also possible using embodiments of the example process flow shown in FIG. 4. Embodiments of the methodologies described herein may be implemented, e.g., using power plant model 68 and operational control system 72 of computing device 66, and/or various modules and/or subcomponents of computing device 66, power plant model 68, or operational control system 72. Methods according to the invention may also rely on other components such as sensor(s) 70 in communicatively coupled to computing device 66 and/or power plant model 68 to measure and/or otherwise determine various parameters to be used as a basis for the processes discussed herein. Environment 150 may be operable to model and adjust various operational parameters of CCPP 12, e.g., by modifying a split ratio between multiple GT systems 30 within CCPP 12. In still further embodiments, power plant model 68 may be operable to modify other instructions and/or actions undertaken via computing device 66 and/or power plant model 68, e.g., by creating one or more variant split ratios which modify relative power generation burden on targeted GT systems 30 within CCPP 12. The illustrative flow diagram in FIG. 4 is shown with several processes organized in an example flow, but it is understood that one or more processes may be implemented simultaneously and/or sequentially, and/or executed in any alternative order while maintaining the various technical features described by example herein.

To initiate methods according to the invention, process P1 may include causing CCPP 12 to operate at a particular load condition and ambient condition. The load condition may refer to the power output from CCPP 12 during operation, and may include fixed or non-fixed loads to accommodate varying circumstances. As examples, a load condition for CCPP 12 may include peak load operation, base load operation, reduced load operation, variable load operation, and/or extended transient operation of CCPP 12. The ambient condition for operating CCPP 12 may refer to the external temperature, pressure, and/or other external variables affecting the operation of CCPP 12. The ambient condition of CCPP 12 may include, e.g., specification temperature operation, raised temperature operation, reduced temperature operation, transient temperature, operation, etc. Various load conditions, ambient conditions, and/or combinations thereof may cause CCPP 12 to exhibit operational parameters (e.g., temperatures, pressures, and flow rates) that differ significantly from their specification levels. Further processes according to the invention may simulate the operation of CCPP 12, and in some cases, modify the operation of CCPP 12 to prevent inefficient operation, greater than desired use of cooling fluid(s) and/or components, and/or to avoid negative consequences of operating outside specified ranges, by changing the relative power generation burden on multiple GT systems 30 within CCPP 12.

During operation of CCPP 12, embodiments of the invention may include generating power plant model 68 of CCPP 12. As used herein, the term "generating" may include one or more processes for simulating the operation of CCPP 12 under a particular load condition and ambient condition, changing of an existing power plant model 68 to "as running" conditions, correcting of an existing power plant model 68 to "as running" conditions, tuning of an existing power plant model 68 to "as running" conditions, calibrating of an existing power plant model 68 to "as running" conditions, and additionally or alternatively verifying the accuracy of power plant model 68 based on concurrent operating data for CCPP 12 and/or other forms of data suitable for verifying the accuracy of power plant model 68. In the case of verifying based on comparing power plant model 68 to CCPP 12 operation, process P2 may include indicating whether power plant model 68 is valid based on whether one or more modeled parameter(s) of CCPP 12 are similar to (i.e., equal to or within a predetermined margin of error) to the actual CCPP 12 parameters. Such verification additionally or alternatively may include changing power plant model 68 to account for discrepancies between model parameters and actual CCPP 12 parameters, and subsequently verifying whether power plant model 68 is accurate after such adjustments occur. The terms "generating" and/or "changing," with respect to power plant model 68, also encompass actions such as "correcting or calibrating or tuning or updating" the power plant model as CCPP plant performance changes over time, e.g., due to degradation, changes, upgrades, etc. In such cases, terms such as "as-running tuned power plant model" may refer to further revising an existing model to arrive at a desired split ratio. Process P2 thus may include determining whether power plant model 68 is acceptably accurate, e.g., based on meeting or exceeding a predetermined amount of accuracy (e.g., percentage of modeled parameters in compliance with CCPP 12, optionally over a predetermined time interval). Power plant model 68, once verified, may represent a baseline set of operating parameters for CCPP 12.

During their operation, implementations of CCPP 12 that feature multiple GT systems 30 may or may not generate power from more than one GT systems 30 at one time. For example, CCPP 12 with three GT systems 30A, 30B, 30C may output power from only one GT system 30 during a particular timespan, but may output power from multiple GT systems 30 during another timespan. Embodiments of the invention modify the load distribution on GT systems 30 only when multiple GT systems 30 are generating power at the same time. In decision D1, modules 202 of power plant model 68 may determine whether multiple GT systems 30 are generating power while CCPP 12 continues to operate at a set of ambient and load conditions. Where only one GT system 30 is generating power (i.e., "No" at decision D1), the method may return to process P1 of continuing to operate CCPP 12 at the existing load and ambient condition until one or both of the conditions change. Where multiple GT systems 30 are generating power (i.e., "Yes" at decision D1), the method may continue by evaluating whether changes in the split ratio between GT systems 30 of CCPP 12 will improve the performance of CCPP 12.

Embodiments of the invention may include modeling a fuel consumption of CCPP 12 using power plant model 68. The amount of fuel consumption may be with respect to a particular time interval for operating CCPP 12, and with respect to the above-noted ambient and/or load conditions for CCPP 12. The fuel consumption of CCPP 12 may be expressed as, e.g., a total amount of fuel expected to be consumed over a particular time interval, and/or by targeted GT system(s) 30, at the modeled load condition and ambient condition. Additionally or alternatively, the fuel consumption modeled in process P3 may be expressed as a percent efficiency, a percentage of fuel consumed relative to desired levels, relative amounts of fuel consumed by each GT system 30, or other load conditions and/or ambient conditions. The fuel consumption modeled in process P3 thus may include any conceivable metric for modeling the amount of fuel consumed by CCPP 12.

Continuing to process P4, embodiments of the invention may include using power plant model 68 to create a variant split ratio for CCPP 12. The variant split ratio may be created in process P4 by any conceivable modeling operation, based on various operating parameters included within and/or modeled by power plant model 68. The variant split ratio may include alternate relative allocations of power generation across GT systems 30A, 30B, 30C. The variant split ratio may also include a schedule of alternative split ratios, each of which are dependent on the total load output from CCPP 12. However expressed, the variant split ratio may affect operational parameters and/or ranges of operational parameters which differ from their present values in power plant model 68. These parameters and other parameters may be modified indirectly, e.g., by modifying the load condition at which CCPP 12 operates. Such parameters may include one or more of inlet temperatures, outlet temperatures, inlet guide vane (IGV) pitch angle, inlet bleed heat (IBH) volume, firing rate, etc. variant split ratio may be biased in favor of specific GT systems 30 and/or allocation profiles based on an operating schedule for CCPP 12, e.g., to favor the use of newer GT systems 30 and/or those with operating specifications more closely aligned with the current ambient and/or load conditions, etc. The relative power generating burden on each GT system 30 in the variant split ratio may be determined, e.g., by random selection of a bias size and/or direction, and/or by applying predetermined logic for variant split ratios that are more likely to improve the operation of CCPP 12. Such logic may be based on power plant model 68, actual parameters of CCPP 12, and/or other variables or models relevant to CCPP 12.

The variant split ratio created in process P4 may include power output increases and/or reductions for each GT system 30 that is currently generating power in CCPP 12. In some cases, one or more quality thresholds of CCPP 12 may improve by modifying the split ratio between GT systems 30 in CCPP 12. In such cases, the variant split ratio may reduce the exhaust temperature/energy, thereby routing less fluid through attemperator(s) 74, and improve CCPP 12 efficiency by reducing fuel consumption for a fixed load. other cases, the variant split ratio may increase the temperature within the load path of CCPP 12. Specifically, the variant split ratio may propose higher or lower power outputs for each GT system 30 in CCPP 12. Such a modification may be desired in cases where one or more GT systems 30 are operating at higher-than-specification loads. Although several variant split ratios to improve efficiency, fuel consumption, system health, etc., may be possible at a particular time, process P4 may require any variant split ratios to have a minimum projected improvement before being power plant model is applied to control of CCPP 12.

After a variant split ratio is created from power plant model 68 in process P4, methods according to the invention may include several decisions for determining whether to modify the operation of CCPP 12 based on the variant split ratio created in process P4. At decision D2, modules 212 of operational control program 72 may evaluate whether applying the variant split ratio to CCPP 12 will continue to meet a quality threshold for CCPP 12 (e.g., maximum values of temperature, pressure, temperature, fuel consumption, etc.). According to an example, the quality threshold may be expressed as whether fuel consumption by CCPP 12 is reduced by at least a threshold amount. In this case, the reduction in fuel consumption may be defined as a percentage (e.g., at least approximately 1% reduction in fuel consumption over a specified timespan). In further examples, the quality threshold may include additional threshold improvements to CCPP 12 operation, e.g., a minimum heat rate reduction, a minimum plant efficiency increase, compliance with an emissions limit, and/or compliance with an operating stability limit for CCPP 12. The "emissions limit" may refer to a maximum allowable level of carbon dioxide and/or nitrogen oxide emissions levels for CCPP 12. The "operating stability limit" may refer a maximum amount by which the variant split ratio reduces the expected lifespan and/or exceeds specification limits for CCPP 12 and/or its subcomponents. As noted herein, the quality threshold(s) evaluated in decision D2 and stored in quality threshold field 228 may include metrics such as a minimum improvement to CCPP 12 performance (e.g., heat rate reduction, plant efficiency increase, fuel consumption reduction, plant capacity increase, etc.), compliance with emissions limits (e.g., Nox emissions, CO emissions, etc.), compliance with operational stability limits (e.g., compressor operability limits, combustion stability limits, gas turbine firing temperature(s), gas turbine exhaust temperature(s), turbine shaft torque limits for system(s) 18, 30, operational limits of HRSG 54, operational limits for ST system 18, condenser pressure limits, etc.), and/or other operational quality metrics for CCPP 12.

In cases where the variant split ratio does not meet the quality threshold (i.e., "No" at decision D2), the method may proceed to process P5 of modifying the variant split ratio. Such modifications may be random changes, and/or may be based on a schedule of possible changes governed by logic within power plant model 68, and/or may be based on results of plant power plant model ("e.g., a "digital twin") based experimentation and/or computations. In cases where the quality threshold is met (i.e., "Yes" at decision D2), the method may continue to further operations for applying the variant split ratio to CCPP 12. In some cases, methods according to the invention may test only a predetermined number of variant split ratios (e.g., five, ten, fifty, or one hundred or more variant split ratios). In such an example, the method may conclude ("Done") after decision D2 indicates that none of the tested variant split ratios meet the relevant quality threshold(s).

In cases where the variant split ratio meets the quality threshold, methods according to the invention may include process P6 in which operational control system 72 adjusts CCPP 12 to use the variant split ratio. Process P6 may involve operational control system 72 applying one or more modifications to GT system(s) 30 (e.g., temperatures such as firing temperature, inlet temperature, exhaust temperature, etc.) to modify their output as defined in the variant split ratio. In some cases, operational control system 72 may adjust and/or otherwise modify the varied parameters based on one or more properties of the specific CCPP 12 unit that is being controlled. In any case, the parameters (e.g., temperatures) being modified may be biased substantially in real time as CCPP 12 continues to operate. After CCPP 12 is adjusted in process P6, the method may conclude ("Done") and CCPP 12 may continue to operate using the variant split ratio. In further examples, the method may return to process P1 of operating CCPP 12 at a particular load and ambient condition, and where applicable repeating all subsequent processes in the event that the load or ambient condition of CCPP 12 changes from its previous state to a new state.

Adjusting CCPP 12 to use the variant split ratio in process P6 may affect one or more additional operations as a result of implementing the variant split ratio. According to one example, the adjusting affect the fluid flow through attemperator(s) 74 to attain the desired temperature increase or reduction within CCCPP 12. In another example, the adjusting may affect a pitch angle of IGV(s) 36, thereby changing the inlet temperature within GT system 30 and/or the temperatures of other fluidly connected components. In yet another example, the adjusting may affect an amount of compressor exhaust fluid routed through IBH line 76, thereby also modifying both the inlet and outlet temperature(s) of compressor 32. In still another example, the modifying may affect a steam output from HRSG 54 to further modify one or more temperatures within ST system 18 and/or GT system 30.

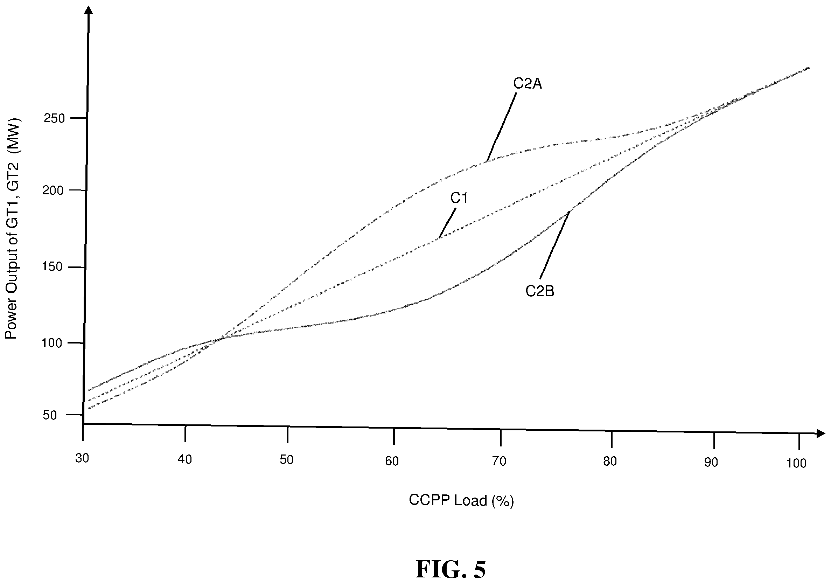

Referring to FIGS. 3-5, embodiments of the invention may significantly modify a power-load curve of CCPP 12 for multiple GT systems 30 during operation, and thus may provide greater operational control of CCPP 12 than conventional control systems. As discussed herein, the temperature-load profile of CCPP 12 (indicated by curve C1) in a conventional setting may evenly distribute load between two GT systems 30 according to a baseline split ratio. This baseline split ratio may be ineffective in cases where one of the two GT systems 30 is better suited to operating at medium loads, e.g., between approximately forty and eighty percent of the output capacity for CCPP 12. In conventional operation, the load on each GT system 30 may increase and decrease linearly with load on CCPP 12 via a first profile C1. Applying the variant split ratio to CCPP 12 according to the invention may cause one of the two GT systems 30 to generate more power than the other over a range of CCPP 12 outputs. As shown, one GT system 30A may have a power-load profile C2A with a higher power allocation than a power-load profile C2B of another GT system 30B between approximately a forty percent and eight percent load range for CCPP 12. In the same variant split ratio, GT system 30A may have a lower power output allocation than GT system 30B below forty percent and above eighty percent of total load. In the illustrated example, this may be due to GT system 30B being better suited to operations at very high and very low power outputs. Thus, methods according to the invention may offer robust control over the relative power outputs from GT systems 30 to suit a wide variety of circumstances.

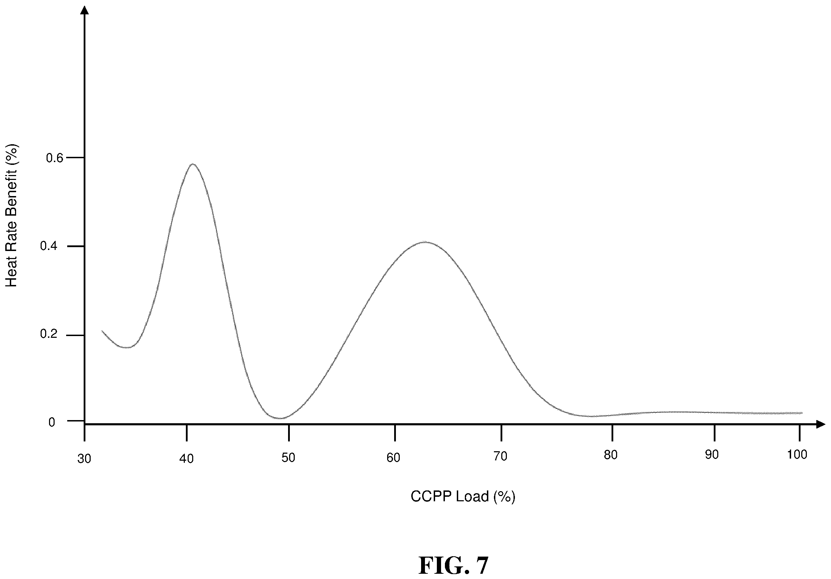

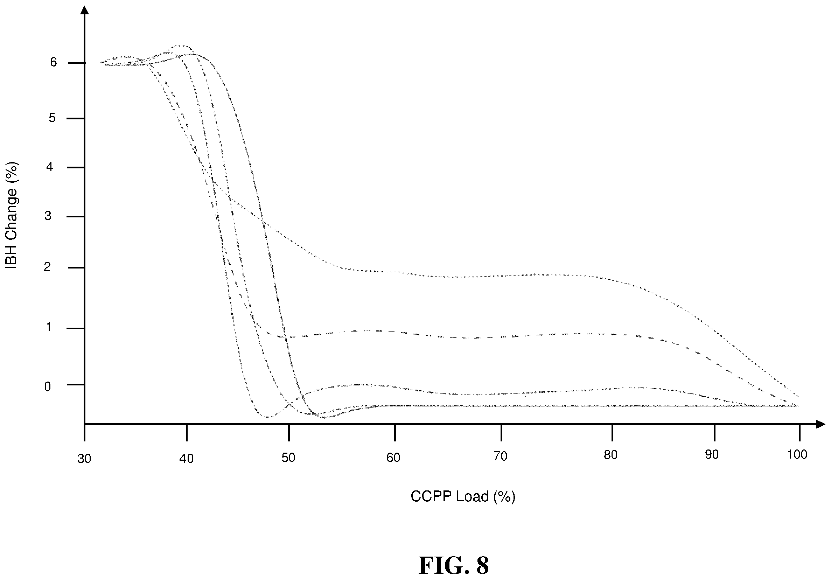

Referring briefly to FIGS. 3, 4, and 7, embodiments of the invention can also significantly affect other related properties of CCPP 12. Specifically, FIG. 8 illustrates the improvement in heat rate (Δ_{HR}) for operating CCPP 12 at the variant split ratio, as compared to a conventional split ratio for CCPP 12. As shown, the percent improvement to heat rate Δ_{HR} can be as large as approximately 0.6% at loads of, e.g., approximately 40% or 68% of the maximum CCPP 12 load.

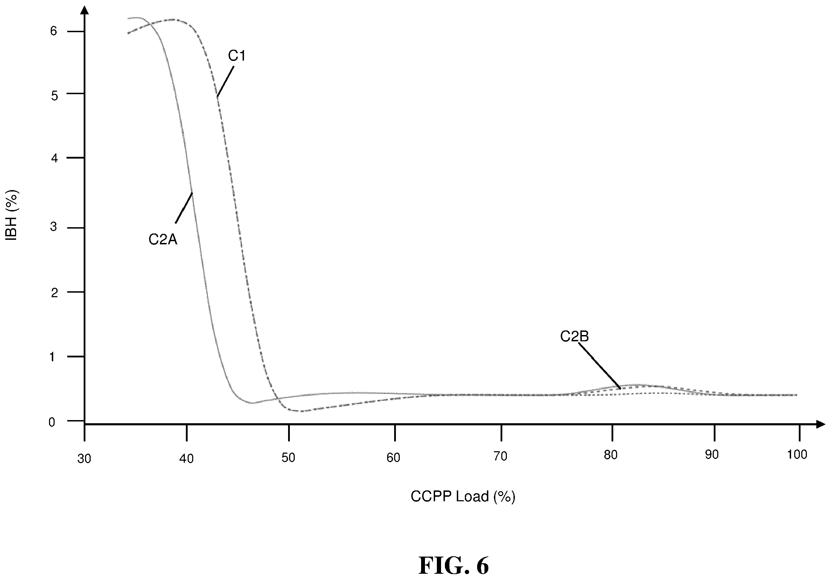

Referring to FIGS. 3, 4, 6, and 8 adjusting CCPP 12 to use a variant split ratio may significantly reduce the amount of fluid diverted through an inlet bleed heat (IBH) pathway of each GT system 30. FIG. 6 compares between profiles for two gas turbine systems 30 (separately identified as C2A, C2B) for a conventional split ratio and a variant split ratio for one GT system 30 CCPP 12 while using the variant split ratio. FIG. 8 compares the percent change of IBH flow for a set of different ambient conditions in which CCPP 12 operates at varying temperatures. FIG. 6 depicts a percent reduction in IBH versus load for a conventional split ratio in curve C1, and for a variant split ratio in curve C2. As shown, the change in IBH will begin at a lower total output for CCPP 12 when a variant split ratio is implemented, and thus provides a lower amount of IBH use throughout the range of possible load outputs for CCPP 12. Referring now to FIG. 8, it is possible for the IBH change to vary widely between different ambient conditions. In such cases, embodiments of the invention may compare each of the various IBH levels for operating at different ambient conditions, and implement one of the possible variant split ratios based on the varying IBH levels and/or other parameters.

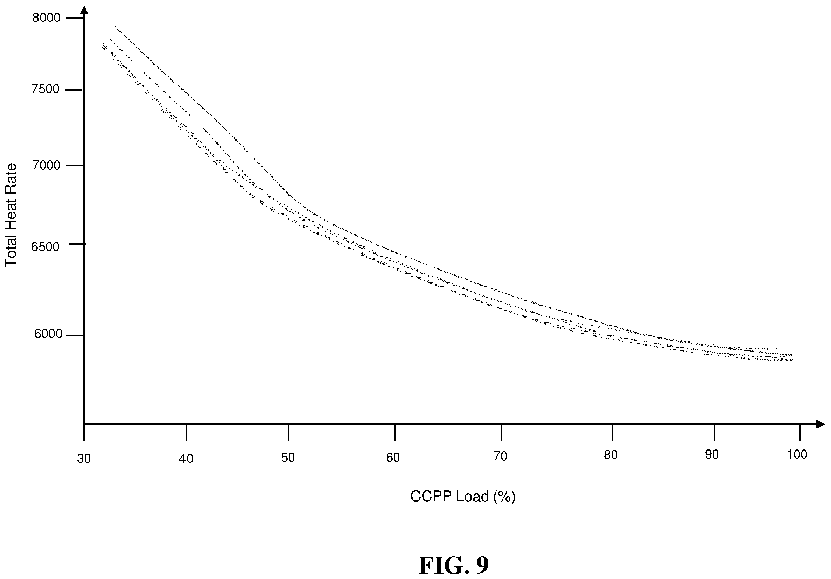

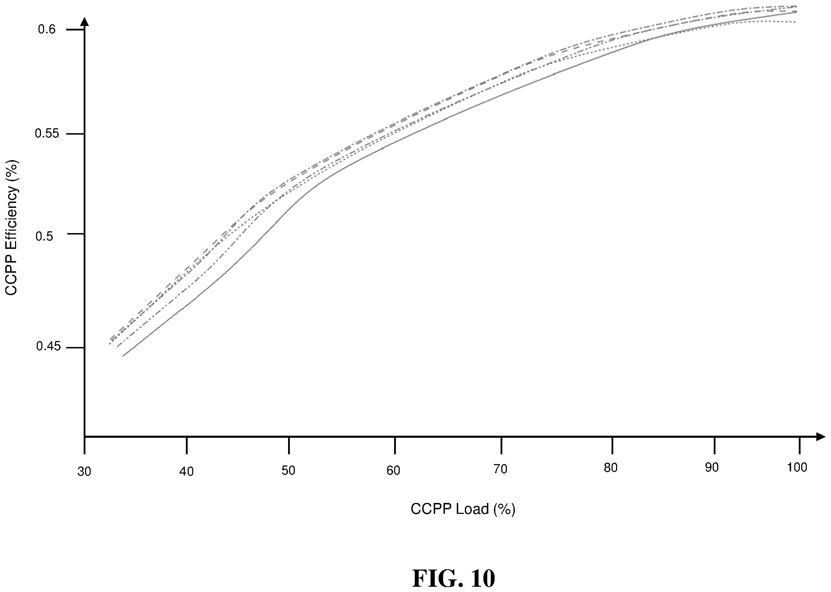

Referring now to FIGS. 3, 4, 9, and 10, selecting one of many possible ambient conditions may affect other characteristics of CCPP 12 during operation. FIG. 9, for example, shows that operating CCPP 12 at different ambient conditions may significantly affect the total heat rate for CCPP 12. The range of possible ambient conditions may cause the total heat rate of CCPP 12 to vary over a range of, e.g., at least approximately five percent of the baseline heat rate for CCPP 12. FIG. 10 similarly shows how implementing embodiments of the invention at different ambient conditions may significant affect the total fuel efficiency of CCPP 12. Dependent on the underlying load condition, ambient condition, and variant split ratio applied to CCPP 12, methods according to the invention may increase the fuel efficiency of CCPP 12 by up to approximately 0.60%, depending on the total load produced by CCPP 12.

Advantages of the invention allow for agile deployment and use of CCPP 12 in a power grid with a variety of energy sources, and/or in non-base load operating settings. In embodiments of the invention, CCPP 12 can allow more efficient use of GT system(s) 30, and their underlying use of fuel, when shifting between different amounts of power output and/or different operating conditions. Embodiments of the invention thus allow CCPP 12 to compensate internally for fluctuations in energy demand, unavailability of other power sources, etc. with minimal effect on the health of each GT system 30. The improvements to CCPP 12 may reduce fuel consumption and improve efficiency during operation, thereby extending the lifespan of individual GT systems 30 and their components. Operating CCPP 12 in a mode where the split ratio between each GT system 30 is modified actively can provide significant lifespan extension, and lower maintenance requirements. Additionally, embodiments of the invention may be implemented without significant changes to CCPP 12 hardware by modifying existing control logic, circuits, etc., to accommodate the operational methodologies described herein.

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," are not to be limited to the precise value specified. In at least some instances, the approximating language may correspond to the precision of an instrument for measuring the value. Here and throughout the specification and claims, range limitations may be combined and/or interchanged; such ranges are identified and include all the sub-ranges contained therein unless context or language indicates otherwise. "Approximately" as applied to a particular value of a range applies to both end values, and unless otherwise dependent on the precision of the instrument measuring the value, may indicate +/- 10% of the stated value(s).

## Claims

1. A method for operating a combined cycle power plant (CCPP) (12), the method comprising:
generating a power plant model (68) for operating the CCPP (12) at an ambient condition (222) and a load condition (224);
determining whether at least two gas turbines (30A, 30B) in the power plant model (68) of the CCPP (12) generate a power output at the ambient condition (222) and the load condition (224);
modeling a fuel consumption of the CCPP (12) for a baseline split ratio between the at least two gas turbines (30A, 30B) using the power plant model (68) of the CCPP (12) at the ambient condition (222) and the load condition (224);
creating a variant split ratio (226) between the at least two gas turbines (30A, 30B);
determining, using the power plant model (68), whether the variant split ratio (226) meets a quality threshold for the CCPP (12), the quality threshold including at least a minimum reduction in the fuel consumption;
recalculating the variant split ratio (226) in response to the variant split ratio (226) not meeting the quality threshold; and
adjusting the CCPP (12) to use the variant split ratio (226) in response to the variant split ratio (226) meeting the quality threshold.

2. The method of claim 1, wherein adjusting the CCPP (12) to use the variant split ratio (226) includes modifying the load condition (224) to affect the inlet guide vane (IGV) (36) pitch angle within the CCPP (12).

3. The method of claim 1, wherein adjusting the CCPP (12) to use the variant split ratio (226) reduces an inlet bleed heat (IBH) flow of exhaust fluid (60) from an exhaust section to an inlet section of a compressor (32) of one of the at least two gas turbines (30A, 30B) of the CCPP (12).

4. The method of claim 1, wherein creating the variant split ratio (226) includes applying a predetermined bias to each of the at least two gas turbines (30A, 30B), based on the ambient condition (222) and the baseline load condition (224).

5. The method of claim 4, wherein the predetermined bias is further based on a health condition of one of the at least two gas turbines (30A, 30B).

6. The method of claim 1, wherein creating the variant split ratio (226) is based on a fuel consumption of the CCPP (12) indicated by the power plant model (68).

7. The method of claim 1, wherein the quality threshold further includes at least a minimum heat rate reduction, a minimum plant efficiency increase, a minimum reduction to fuel consumption, a fuel consumption limit, an emissions limit, or an operating stability limit for the CCPP (12).

8. The method of claim 1, further comprising:
detecting a new load condition (224) or a new ambient condition (222) of the CCPP (12);
creating a new variant split load for the new load condition (224) or the new ambient condition (222);
determining, using the power plant model (68), whether the new variant split ratio (226) meets the quality threshold for the CCPP (12);
recalculating the new variant split ratio (226) in response to the new variant split ratio (226) not meeting the quality threshold; and
adjusting the CCPP (12) to use the new variant split ratio (226) in response to the new variant split ratio (226) meeting the quality threshold.

9. The method of claim 1, wherein the variant split ratio (226) includes a plurality of load-dependent split ratios for the CCPP (12).

10. A program product stored on a computer readable storage medium for operating a combined cycle power plant (CCPP) (12), the computer readable storage medium comprising program code for causing a computer system to perform actions including:
generating a power plant model (68) for operating the CCPP (12) at an ambient condition (222) and a load condition (224);
determining whether at least two gas turbines (30A, 30B) in the power plant model (68) of the CCPP (12) generate a power output at the ambient condition (222) and the load condition (224);
modeling a fuel consumption of the CCPP (12) for a baseline split ratio between the at least two gas turbines (30A, 30B) using the power plant model (68) of the CCPP (12) at the ambient condition (222) and the load condition (224);
creating a variant split ratio (226) between the at least two gas turbines (30A, 30B);
determining, using the power plant model (68), whether the variant split ratio (226) meets a quality threshold for the CCPP (12), the quality threshold including at least a minimum reduction in the fuel consumption;
recalculating the variant split ratio (226) in response to the variant split ratio (226) not meeting the quality threshold; and
adjusting the CCPP (12) to use the variant split ratio (226) in response to the variant split ratio (226) meeting the quality threshold.

11. The program product of claim 10, wherein adjusting the CCPP (12) to use the variant split ratio (226) includes modifying the load condition (224) to affect the inlet guide vane (IGV) (36) pitch angle within the CCPP (12).

12. The program product of claim 10, wherein adjusting the CCPP (12) to use the variant split ratio (226) reduces an inlet bleed heat (IBH) flow of exhaust fluid (60) from an exhaust section to an inlet section of one of the at least two gas turbines (30A, 30B) of a compressor (32) of the CCPP (12).

13. The program product of claim 10, wherein creating the variant split ratio (226) includes applying a predetermined bias to each of the at least two gas turbines (30A, 30B), based on the ambient (222) condition and the baseline load condition (224).

14. The program product of claim 10, wherein the quality threshold further includes at least a minimum heat rate reduction, a minimum plant efficiency increase, a minimum reduction to fuel consumption, a fuel consumption limit, an emissions limit, or an operating stability limit for the CCPP (12).

15. The program product of claim 10, further comprising program code for:
detecting a new load condition (224) or a new ambient condition (222) of the CCPP (12);
creating a new variant split load for the new load condition (224) or the new ambient condition (222);
determining, using the power plant model (68), whether the new variant split ratio (226) meets the quality threshold for the CCPP (12);
recalculating the new variant split ratio (226) in response to the new variant split ratio (226) not meeting the quality threshold; and
adjusting the CCPP (12) to use the new variant split ratio (226) in response to the new variant split ratio (226) meeting the quality threshold.

## Patentansprüche

1. Verfahren zum Betreiben eines Gas-und-Dampf-Kombikraftwerks (GuD-Kraftwerks) (12), das Verfahren umfassend:
Erzeugen eines Kraftwerksmodells (68) zum Betreiben des GuD-Kraftwerks (12) bei einer Umgebungsbedingung (222) und einer Lastbedingung (224);
Bestimmen, ob mindestens zwei Gasturbinen (30A, 30B) in dem Kraftwerksmodell (68) des GuD-Kraftwerks (12) bei der Umgebungsbedingung (222) und der Lastbedingung (224) eine Leistungsabgabe erzeugen;
Modellieren eines Brennstoffverbrauchs des GuD-Kraftwerks (12) bei einem Ausgangsaufteilungsverhältnis zwischen den mindestens zwei Gasturbinen (30A, 30B) unter Verwendung des Kraftwerksmodells (68) des GuD-Kraftwerks (12) bei der Umgebungsbedingung (222) und der Lastbedingung (224);
Herstellen eines abgewandelten Aufteilungsverhältnisses (226) zwischen den mindestens zwei Gasturbinen (30A, 30B);
Bestimmen, unter Verwendung des Kraftwerksmodells (68), ob das abgewandelte Aufteilungsverhältnis (226) einen Qualitätsschwellenwert bezüglich des GuD-Kraftwerks (12) erfüllt, wobei der Qualitätsschwellenwert mindestens eine minimale Reduzierung des Brennstoffverbrauchs einschließt;
Neuberechnen des abgewandelten Aufteilungsverhältnisses (226) als Reaktion darauf, dass das abgewandelte Aufteilungsverhältnis (226) den Qualitätsschwellenwert nicht erfüllt; und
Anpassen des GuD-Kraftwerks (12), sodass das abgewandelte Aufteilungsverhältnis (226) verwendet wird, als Reaktion darauf, dass das abgewandelte Aufteilungsverhältnis (226) den Qualitätsschwellenwert erfüllt.

2. Verfahren nach Anspruch 1, wobei das Anpassen des GuD-Kraftwerks (12), sodass das abgewandelte Aufteilungsverhältnisses (226) verwendet wird, das Modifizieren der Lastbedingung (224) einschließt, um den Anstellwinkel des Eintrittsleitrads (IGV) (36) in dem GuD-Kraftwerk (12) zu beeinflussen.

3. Verfahren nach Anspruch 1, wobei bei dem Anpassen des GuD-Kraftwerks (12), sodass das abgewandelte Aufteilungsverhältnis (226) verwendet wird, ein Fluss von Einlassableitwärme (IBH) eines Ablassfluids (60) aus einem Ablassabschnitt zu einem Einlassabschnitt eines Verdichters (32) einer der mindestens zwei Gasturbinen (30A, 30B) des GuD-Kraftwerks (12) reduziert wird.

4. Verfahren nach Anspruch 1, wobei das Herstellen des abgewandelten Aufteilungsverhältnisses (226) das Anwenden einer vorbestimmten Verschiebung auf jede der mindestens zwei Gasturbinen (30A, 30B) basierend auf der Umgebungsbedingung (222) und der Ausgangslastbedingung (224) einschließt.

5. Verfahren nach Anspruch 4, wobei die vorbestimmte Verschiebung ferner auf einer Zustandsbedingung einer der mindestens zwei Gasturbinen (30A, 30B) basiert.

6. Verfahren nach Anspruch 1, wobei das Herstellen des abgewandelten Aufteilungsverhältnisses (226) auf einem Brennstoffverbrauch des GuD-Kraftwerks (12) basiert, der durch das Kraftwerksmodell (68) angegeben wird.

7. Verfahren nach Anspruch 1, wobei der Qualitätsschwellenwert ferner mindestens eine minimale Wärmestromreduzierung, eine minimale Anlagenwirkungsgraderhöhung, eine minimale Reduzierung des Brennstoffverbrauchs, eine Brennstoffverbrauchsgrenze, eine Emissionsgrenze oder eine Betriebsstabilitätsgrenze des GuD-Kraftwerks (12) einschließt.

8. Verfahren nach Anspruch 1, ferner umfassend:
Erfassen einer neuen Lastbedingung (224) oder einer neuen Umgebungsbedingung (222) des GuD-Kraftwerks (12);
Herstellen einer neuen abgewandelten Lastaufteilung für die neue Lastbedingung (224) oder die neue Umgebungsbedingung (222);
Bestimmen, unter Verwendung des Kraftwerksmodells (68), ob das neue abgewandelte Aufteilungsverhältnis (226) den Qualitätsschwellenwert für das GuD-Kraftwerk (12) erfüllt;
Neuberechnen des neuen abgewandelten Aufteilungsverhältnisses (226) als Reaktion darauf, dass das neue abgewandelte Aufteilungsverhältnis (226) den Qualitätsschwellenwert nicht erfüllt; und
Anpassen des GuD-Kraftwerks (12), sodass das neue abgewandelte Aufteilungsverhältnis (226) verwendet wird, als Reaktion darauf, dass das neue abgewandelte Aufteilungsverhältnis (226) den Qualitätsschwellenwert erfüllt.

9. Verfahren nach Anspruch 1, wobei das abgewandelte Aufteilungsverhältnis (226) eine Vielzahl von lastabhängigen Aufteilungsverhältnissen für das GuD-Kraftwerk (12) einschließt.

10. Programmprodukt, das auf einem computerlesbaren Speichermedium gespeichert ist, zum Betreiben eines Gas-und-Dampf-Kombikraftwerks (GuD-Kraftwerks) (12), wobei das computerlesbare Speichermedium Programmcode umfasst, der ein Computersystem dazu veranlasst, Aktionen durchzuführen, die einschließen:
Erzeugen eines Kraftwerksmodells (68) zum Betreiben des GuD-Kraftwerks (12) bei einer Umgebungsbedingung (222) und einer Lastbedingung (224);
Bestimmen, ob mindestens zwei Gasturbinen (30A, 30B) in dem Kraftwerksmodell (68) des GuD-Kraftwerks (12) bei der Umgebungsbedingung (222) und der Lastbedingung (224) eine Leistungsabgabe erzeugen;
Modellieren eines Brennstoffverbrauchs des GuD-Kraftwerks (12) bei einem Ausgangsaufteilungsverhältnis zwischen den mindestens zwei Gasturbinen (30A, 30B) unter Verwendung des Kraftwerksmodells (68) des GuD-Kraftwerks (12) bei der Umgebungsbedingung (222) und der Lastbedingung (224);
Herstellen eines abgewandelten Aufteilungsverhältnisses (226) zwischen den mindestens zwei Gasturbinen (30A, 30B);
Bestimmen, unter Verwendung des Kraftwerksmodells (68), ob das abgewandelte Aufteilungsverhältnis (226) einen Qualitätsschwellenwert bezüglich des GuD-Kraftwerks (12) erfüllt, wobei der Qualitätsschwellenwert mindestens eine minimale Reduzierung des Brennstoffverbrauchs einschließt;
Neuberechnen des abgewandelten Aufteilungsverhältnisses (226) als Reaktion darauf, dass das abgewandelte Aufteilungsverhältnis (226) den Qualitätsschwellenwert nicht erfüllt; und
Anpassen des GuD-Kraftwerks (12), sodass das abgewandelte Aufteilungsverhältnis (226) verwendet wird, als Reaktion darauf, dass das abgewandelte Aufteilungsverhältnis (226) den Qualitätsschwellenwert erfüllt.

11. Programmprodukt nach Anspruch 10, wobei das Anpassen des GuD-Kraftwerks (12), sodass das abgewandelte Aufteilungsverhältnis (226) verwendet wird, das Modifizieren der Lastbedingung (224) einschließt, um den Anstellwinkel des Eintrittsleitrads (IGV) (36) in dem GuD-Kraftwerk (12) zu beeinflussen.

12. Programmprodukt nach Anspruch 10, wobei bei dem Anpassen des GuD-Kraftwerks (12), sodass das abgewandelte Aufteilungsverhältnis (226) verwendet wird, ein Fluss der Einlassableitwärme (IBH) eines Ablassfluids (60) aus einem Ablassabschnitt zu einem Einlassabschnitt einer der mindestens zwei Gasturbinen (30A, 30B) eines Verdichters (32) des GuD-Kraftwerks (12) reduziert wird.

13. Programmprodukt nach Anspruch 10, wobei das Herstellen des abgewandelten Aufteilungsverhältnisses (226) das Anwenden einer vorbestimmten Verschiebung auf jede der mindestens zwei Gasturbinen (30A, 30B) basierend auf der Umgebungsbedingung (222) und der Ausgangslastbedingung (224) einschließt.

14. Programmprodukt nach Anspruch 10, wobei der Qualitätsschwellenwert ferner mindestens eine minimale Wärmerstromreduzierung, eine minimale Anlagenwirkungsgraderhöhung, eine minimale Reduzierung des Brennstoffverbrauchs, eine Brennstoffverbrauchsgrenze, eine Emissionsgrenze oder eine Betriebsstabilitätsgrenze des GuD-Kraftwerks (12) einschließt.

15. Programmprodukt nach Anspruch 10, ferner umfassend Programmcode zum:
Erfassen einer neuen Lastbedingung (224) oder einer neuen Umgebungsbedingung (222) des GuD-Kraftwerks (12);
Herstellen einer neuen abgewandelten Lastaufteilung für die neue Lastbedingung (224) oder die neue Umgebungsbedingung (222);
Bestimmen, unter Verwendung des Kraftwerksmodells (68), ob das neue abgewandelte Aufteilungsverhältnis (226) den Qualitätsschwellenwert für das GuD-Kraftwerk (12) erfüllt;
Neuberechnen des neuen abgewandelten Aufteilungsverhältnisses (226) als Reaktion darauf, dass das neue abgewandelte Aufteilungsverhältnis (226) den Qualitätsschwellenwert nicht erfüllt; und
Anpassen des GuD-Kraftwerks (12), sodass das neue abgewandelte Aufteilungsverhältnis (226) verwendet wird, als Reaktion darauf, dass das neue abgewandelte Aufteilungsverhältnis (226) den Qualitätsschwellenwert erfüllt.

## Revendications

1. Procédé pour faire fonctionner une centrale électrique à cycle combiné (CCPP) (12), le procédé comprenant :
la génération d'un modèle de centrale électrique (68) pour faire fonctionner la CCPP (12) à une condition ambiante (222) et à une condition de charge (224) ;
le fait de déterminer si au moins deux turbines à gaz (30A, 30B) dans le modèle de centrale électrique (68) de la CCPP (12) génèrent une sortie de puissance à la condition ambiante (222) et à la condition de charge (224) ;
la modélisation d'une consommation en carburant de la CCPP (12) pour un rapport de division de ligne de base entre les au moins deux turbines à gaz (30A, 30B) en utilisant le modèle de centrale électrique (68) de la CCPP (12) à la condition ambiante (222) et à la condition de charge (224) ;
la création d'une variante de rapport de division (226) entre les au moins deux turbines à gaz (30A, 30B) ;
le fait de déterminer, en utilisant le modèle de centrale électrique (68), si la variante de rapport de division (226) respecte un seuil de qualité pour la CCPP (12), le seuil de qualité incluant au moins une réduction minimale de la consommation en carburant ;
le recalcul de la variante de rapport de division (226) en réponse à la variante de rapport de division (226) ne respectant pas le seuil de qualité ; et
l'ajustement de la CCPP (12) pour utiliser la variante de rapport de division (226) en réponse à la variante de rapport de division (226) respectant le seuil de qualité.

2. Procédé selon la revendication 1, dans lequel l'ajustement de la CCPP (12) pour utiliser la variante de rapport de division (226) inclut la modification de la condition de charge (224) pour influer sur l'angle de pas de l'aube directrice d'entrée (IGV) (36) au sein de la CCPP (12).

3. Procédé selon la revendication 1, dans lequel l'ajustement de la CCPP (12) pour utiliser la variante de rapport de division (226) réduit un écoulement de chauffage de purge d'admission (IBH) de fluide d'échappement (60) à partir de la section d'échappement jusqu'à une section d'entrée d'un compresseur (32) d'une des au moins deux turbines à gaz (30A, 30B) de la CCPP (12).

4. Procédé selon la revendication 1, dans lequel la création de la variante de rapport de division (226) inclut l'application d'une sollicitation prédéterminée à chacune des au moins deux turbines à gaz (30A, 30B), sur la base de la condition ambiante (222) et de la condition de charge de ligne de base (224).

5. Procédé selon la revendication 4, dans lequel la sollicitation prédéterminée est en outre basée sur une condition d'intégrité d'une des au moins deux turbines à gaz (30A, 30B).

6. Procédé selon la revendication 1, dans lequel la création de la variante de rapport de division (226) est basée sur une consommation en carburant de la CCPP (12) indiquée par le modèle de centrale électrique (68).

7. Procédé selon la revendication 1, dans lequel le seuil de qualité inclut en outre au moins une réduction de rendement thermique minimal, une augmentation de rendement minimal d'installation, une réduction minimale de la consommation en carburant, une limite de consommation en carburant, une limite d'émissions, ou une limite de stabilité de fonctionnement pour la CCPP (12).

8. Procédé selon la revendication 1, comprenant en outre :
la détection d'une nouvelle condition de charge (224) ou d'une nouvelle condition ambiante (222) de la CCPP (12) ;
la création d'une nouvelle variante de charge de fractionnement pour la nouvelle condition de charge (224) ou la nouvelle condition ambiante (222) ;
le fait de déterminer, en utilisant le modèle de centrale électrique (68), si la nouvelle variante de rapport de division (226) respecte le seuil de qualité pour la CCPP (12) ;
le recalcul de la nouvelle variante de rapport de division (226) en réponse à la nouvelle variante de rapport de division (226) ne respectant pas le seuil de qualité ; et
l'ajustement de la CCPP (12) pour utiliser la nouvelle variante de rapport de division (226) en réponse à la nouvelle variante de rapport de division (226) respectant le seuil de qualité.

9. Procédé selon la revendication 1, dans lequel la variante de rapport de division (226) inclut une pluralité de rapports de division dépendant de la charge pour la CCPP (12).

10. Produit programme stocké sur un support de stockage lisible par ordinateur pour faire fonctionner une centrale électrique à cycle combiné (CCPP) (12), le support de stockage lisible par ordinateur comprenant un code de programme pour amener un système informatique à mettre en oeuvre des actions incluant :
la génération d'un modèle de centrale électrique (68) pour faire fonctionner la CCPP (12) à une condition ambiante (222) et à une condition de charge (224) ;
le fait de déterminer si au moins deux turbines à gaz (30A, 30B) dans le modèle de centrale électrique (68) de la CCPP (12) génèrent une sortie de puissance à la condition ambiante (222) et à la condition de charge (224) ;
la modélisation d'une consommation en carburant de la CCPP (12) pour un rapport de division de ligne de base entre les au moins deux turbines à gaz (30A, 30B) en utilisant le modèle de centrale électrique (68) de la CCPP (12) à la condition ambiante (222) et à la condition de charge (224) ;
la création d'une variante de rapport de division (226) entre les au moins deux turbines à gaz (30A, 30B) ;
le fait de déterminer, en utilisant le modèle de centrale électrique (68), si la variante de rapport de division (226) respecte un seuil de qualité pour la CCPP (12), le seuil de qualité incluant au moins une réduction minimale de la consommation en carburant ;
le recalcul de la variante de rapport de division (226) en réponse à la variante de rapport de division (226) ne respectant pas le seuil de qualité ; et
l'ajustement de la CCPP (12) pour utiliser la variante de rapport de division (226) en réponse à la variante de rapport de division (226) respectant le seuil de qualité.

11. Produit programme selon la revendication 10, dans lequel l'ajustement de la CCPP (12) pour utiliser la variante de rapport de division (226) inclut la modification de la condition de charge (224) pour influer sur l'angle de pas de l'aube directrice d'entrée (IGV) (36) au sein de la CCPP (12).

12. Produit programme selon la revendication 10, dans lequel l'ajustement de la CCPP (12) pour utiliser la variante de rapport de division (226) réduit un écoulement de chauffage de purge d'admission (IBH) de fluide d'échappement (60) à partir de la section d'échappement jusqu'à une section d'entrée d'une des au moins deux turbines à gaz (30A, 30B) d'un compresseur (32) de la CCPP (12).

13. Produit programme selon la revendication 10, dans lequel la création de la variante de rapport de division (226) inclut l'application d'une sollicitation prédéterminée à chacune des au moins deux turbines à gaz (30A, 30B), sur la base de la condition ambiante (222) et de la condition de charge de ligne de base (224).

14. Produit programme selon la revendication 10, dans lequel le seuil de qualité inclut en outre au moins une réduction de rendement thermique minimal, une augmentation de rendement minimal d'installation, une réduction minimale de la consommation en carburant, une limite de consommation en carburant, une limite d'émissions, ou une limite de stabilité de fonctionnement pour la CCPP (12).

15. Produit programme selon la revendication 10, comprenant en outre un code de programme pour :
détecter une nouvelle condition de charge (224) ou une nouvelle condition ambiante (222) de la CCPP (12) ;
créer une nouvelle variante de charge de fractionnement pour la nouvelle condition de charge (224) ou la nouvelle condition ambiante (222) ;
déterminer, en utilisant le modèle de centrale électrique (68), si la nouvelle variante de rapport de division (226) respecte le seuil de qualité pour la CCPP (12) ;
recalculer la nouvelle variante de rapport de division (226) en réponse à la nouvelle variante de rapport de division (226) ne respectant pas le seuil de qualité ; et
ajuster la CCPP (12) pour utiliser la nouvelle variante de rapport de division (226) en réponse à la nouvelle variante de rapport de division (226) respectant le seuil de qualité.
